# FASCICULE DE BREVET EUROPEEN

(11) **EP 1 069 355 B1**
(45) Date de publication et mention de la délivrance du brevet: **18.01.2006**
(21) Numéro de dépôt: 00202172.3
(22) Date de dépôt: 22.06.2000
(51) Int. Cl.: F16K 17/38

(54) **Soupape de sûreté pour réservoir de gaz sous pression**
Sicherheitsventil für Druckbehälter
Safety valve for pressure vessel

(30) Priorité: 14.07.1999 LU 90414
(43) Date de publication de la demande: 17.01.2001
(73) Titulaire: LUXEMBOURG PATENT COMPANY S.A., 1720 Luxembourg (LU)
(72) Inventeur: Kerger, Léon, 7382 Helmdange (LU); Schmitz, Jean-Claude, 7340 Heisdorf (LU)
(74) Mandataire: Van Malderen, Michel

(56) Documents cités:
- EP-A- 0 766 028
- US-A- 5 459 768
- US-A- 5 511 576

## Description

La présente invention concerne une soupape de sûreté pour réservoir de gaz sous pression comprenant un bouchon en matière fusible destiné à fondre à une température prédéterminée pour libérer le gaz sous pression hors du réservoir, telle que connue de EP-A-0766028.

De telles soupapes de sûreté sont utilisées pour éviter des risques d'explosion du réservoir lorsque la température dépasse une limite prédéterminée. En effet, à cette température, qui peut être de l'ordre de 100°C, le bouchon mentionné dans le préambule fond et permet l'échappement des gaz et les excès de pression. En dessous de cette température crifiqque, le bouchon doit normalement rester solide et empêcher toute fuite de pression et de gaz.

Malheureusement, on a constaté qu'il arrive que le bouchon fonde prématurément, c'est-à-dire à des températures inférieures à sa température de fusion. On a constaté que ces cas se produisent lorsque le gaz est stocké à des pressions élevées et que l'origine de cette fusion est non pas la température mais la pression. On a, en effet, trouvé que si un tel bouchon est exposé pendant un temps relativement long à des pressions élevées, il peut se déformer et même fondre et ainsi libérer les gaz en dessous de la température de fusion. Il y a donc une fuite non voulue avec des risques d'accident et des risques pour l'environnement En outre, la matière du bouchon à remplacer est excessivement chère.

Le but de la présente invention est de prévoir une nouvelle soupape de sûreté qui permet d'éviter ces inconvénients, c'est-à-dire une soupape dont le bouchon ne risque pas de fondre prématurément sous l'effet d'une pression prolongée.

Pour atteindre cet objectif, l'invention prévoit une soupape de sûreté du genre décrit dans le préambule qui est essentiellement caractérisée en ce que le bouchon fusible est soumis à l'action d'un piston coulissant à action différentielle destiné à réduire au moins une partie de l'effet de la pression du gaz sur le bouchon fusible.

Selon un mode de réalisation préféré, la soupape comporte un boîtier solidaire du réservoir comprenant une première partie cylindrique ouverte vers l'extérieur du réservoir et une seconde partie cylindrique à fond fermé d'un diamètre inférieur à la première partie cylindrique et communiquant à travers sa paroi latérale, avec l'intérieur du réservoir, une douille fixée à l'intérieur de la première partie cylindrique et dont l'ouverture est tournée vers la seconde partie cylindrique, la douille contenant le bouchon fusible qui y est retenu par une tige solidaire dudit piston à action différentielle se trouvant dans ladite seconde partie cylindrique. Ledit piston à action différentielle est, de préférence, un piston à double action comprenant deux pistons reliés par une tige axiale, le premier piston se trouvant normalement au fond de la seconde partie cylindrique et le second piston normalement entre la première et la seconde partie cylindrique pour assurer l'étanchéité entre celle-ci, le diamètre de ce dernier piston étant supérieur au diamètre du premier piston.

L'effet de la pression du gaz sur le second piston produit par conséquent une force de poussée sur le bouchon fusible qui est proportionnelle à la pression du gaz et à la surface exposée du second piston. En revanche, le premier piston, qui est également exposé à la pression du gaz, agit dans le sens opposé, c'est-à-dire que son effet se soustrait à la force de poussée exercée par le second piston sur le bouchon fusible. Finalement, celui-ci ne subit qu'une force proportionnelle à la différence des surfaces des deux pistons. Le bouchon ne subit par conséquent qu'une faible pression et ne risque pas de se détériorer prématurément sous l'effet d'une pression élevée et prolongée.

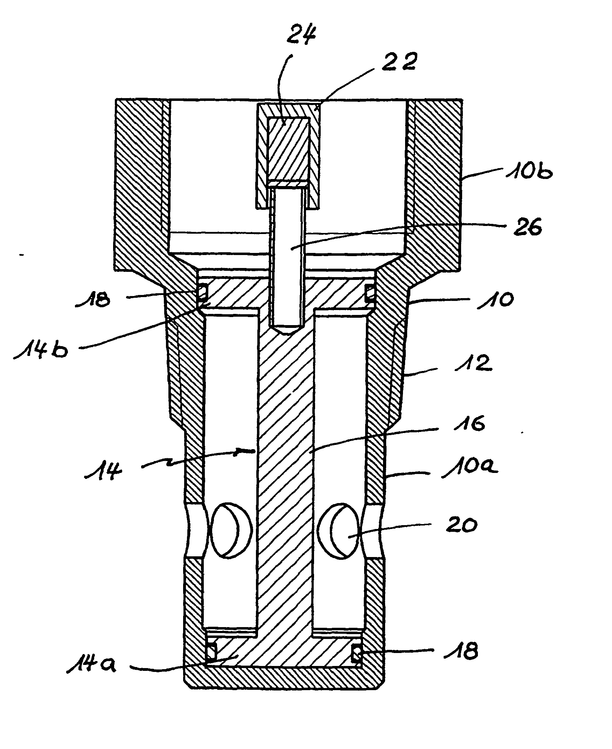

D'autres particularités de la présente invention ressortiront de la description d'un mode de réalisation avantageux, présenté ci-dessous, à titre d'illustration, en référence à la figure unique en annexe qui est une vue en coupe verticale à travers une soupape de sûreté selon la présente invention.

Cette soupape de sûreté comporte un boîtier 10 avec un filetage extérieur 12 permettant à la soupape d'être vissée dans la paroi non montrée d'un réservoir contenant un gaz sous pression. Le boîtier comporte une partie supérieure 10b tournée vers l'extérieur lorsque la soupape est montée sur le réservoir et une partie inférieure 10a pénétrant à l'intérieur du réservoir.

La partie inférieure 10a du boîtier 10 est un cylindre à fond fermé contenant un piston 14 à action différentielle qui est constitué d'un premier piston 14a se trouvant normalement au fond de la partie cylindrique inférieure 10a et un second piston 14b se trouvant normalement dans le col entre les deux parties 10a et 10b. Les deux pistons 14a et 14b, qui sont reliés entre eux par une tige axiale 16, portent chacun un joint périphérique 18 assurant l'étanchéité avec la paroi de la partie inférieure du boîtier 10. Le second piston 14b est donc l'organe de fermeture de la soupape et assure l'étanchéité entre l'intérieur du réservoir et l'extérieur.

La paroi du boîtier 10a comporte une série d'ouvertures 20 afin que la pression dans le boîtier 10a corresponde à la pression dans le réservoir, c'est-à-dire que cette pression puisse s'exercer pleinement sur chacun des pistons 14a et 14b.

Selon l'une des particularités de la présente invention, le diamètre du premier piston 14a est légèrement plus petit que celui du second piston 14b. Il faut donc que le diamètre intérieur de la paroi du boîtier 10a soit, au niveau du piston 14b, supérieure au diamètre intérieur dans le fond du boîtier 10a.

La partie supérieure et extérieure 10b du boîtier 10 possède un diamètre intérieur qui est sensiblement plus élevé que le diamètre du piston supérieur 14b.

Dans la partie supérieure 10b du boîtier se trouve une douille retour née 22, donc à fond ouvert, contenant un bouchon 24 en matière fusible fondant à une température critique prédéterminée, par exemple environ 100°C. La douille 22 est rendue, par des moyens non représentés, par exemple par des rayons, solidaire de la paroi de la partie supérieure 10b du boîtier 10.

La partie extérieure du piston 14b porte une tige axiale 16 qui s'étend dans la partie supérieure 10b du boîtier 10 et pénètre dans la douille 22 jusqu'au contact du bouchon 24. Cette tige 26 a un diamètre légèrement inférieur au diamètre intérieur de la douille 22.

En opération normale, la soupape occupe la position représentée sur la figure. Le bouchon 24 est solide et retient, sous l'effet de la tige 26 et grâce à la liaison non représentée entre la douille 22 et le boîtier 10b, le piston 14 dans la position représentée. Le piston 14b, grâce à son joint périphérique 18, empêche, par conséquent, toute fuite de gaz vers l'extérieur. En outre, vu que la pression du gaz agit à la fois sur le piston 14a et sur le piston 14b, le bouchon 24 ne subit qu'une faible force de poussée de la part de la tige 26, qui est proportionnelle à la différence de surface radiale entre les deux pistons 14a et 14b.

Lorsque, pour une raison ou l'autre, la douille 22 et le bouchon 24 sont exposés à une température anormale dépassant la température critique de fusion du bouchon 24 et pouvant constituer un risque d'explosion du réservoir, le bouchon 24 fond et sa matière liquide s'écoule hors de la douille 22 autour de la tige 26. La douille 22 étant vide, la tige 26 n'y trouve plus aucun résistance et la force ascensionnelle agissant sur le piston 14 sous l'effet de la pression différentielle est suffisante pour soulever le piston 14 et faire pénétrer le piston 14b dans la partie supérieure 10b du boîtier à diamètre élargi. Ici, le piston 14b n'assure plus aucune étaachéité avec la surface extérieure et les gaz sous pression peuvent dès lors s'échapper librement hors du réservoir.

Pour éviter que, suite à une dégradation du joint 18 du piston 14b, il se produise progressivement une accumulation de gaz entre le fond du boîtier 10a et le fond du piston 14a, il est possible d'aérer cette zone en prévoyant, à travers tout le piston 14, une mince cheminée axiale qui débouche dans l'enceinte ouverte du boîtier 10b.

Sachant que la matière fusible du bouchon 24 est généralement à base d'étain à souder comme celle des brasures, il est possible de prévoir une variante au bouchon 24. Cette variante consisterait à prévoir, à la place de la douille 22 fermée vers le dessus, un tube ouvert aux deux extrémités et de réaliser la tête de la tige en brasure ou métal fusible, qui serait soudé à ce tube pour résister à la pression différentielle sur le piston 14. A la température critique, cette soudure fondrait et permettrait à la tige 26 de glisser à travers le tube et d'ouvrir ainsi la soupape.

## Revendications

1. Soupape de sûreté pour réservoir de gaz sous pression comprenant un bouchon (24) en matière fusible destiné à fondre à une température prédéterminée pour libérer le gaz sous pression hors du réservoir, **caractérisée en ce que** le bouchon fusible (24) est soumis à l'action d'un piston coulissant (14) à action différentielle destiné à réduire au moins une partie de l'effet de la pression du gaz sur le bouchon fusible (24).

2. Soupape selon la revendication 1, **caractérisée en ce qu'**elle comporte un boîtier (10) solidaire du réservoir comprenant une première partie cylindrique (10b) ouverte vers l'extérieur du réservoir et une seconde partie cylindrique (10a) à fond fermé d'un diamètre inférieur à la première partie cylindrique (10b) et communiquant, à travers sa paroi latérale, avec l'intérieur du réservoir, une douille (22) fixée à l'intérieur de la première partie cylindrique (10b) et dont l'ouverture est tournée vers la seconde partie cylindrique (10a), la douille contenant le bouchon fusible (24) qui y est retenue par une tige (26) solidaire dudit piston (14) à action différentielle se trouvant dans ladite seconde partie cylindrique (10a) et **en ce que** ledit piston à action différentielle (14) est un piston à double action comprenant deux pistons reliés par une tige axiale (16), le premier piston (14a) se trouvant normalement au fond de la seconde partie cylindrique (10a) et le second piston (14b) se trouvant normalement entre la première et la seconde partie cylindrique pour assurer l'étanchéité entre celles-ci, le diamètre du second piston (14b) étant supérieur au diamètre du premier piston (14a).

## Patentansprüche

1. Sicherheitsventil für einen unter Druck stehenden Gasvorratsbehälter, das einen Stopfen (24) aus schmelzbarem Material enthält, der bei einer bestimmten, vorher festgelegten Temperatur schmilzt und dabei das unter Druck stehende Gas freisetzt. Das Sicherheitsventil zeichnet sich ferner **dadurch** aus, dass auf den schmelzbaren Stopfen (24) ein Kolben (14) mit einer Schiebewirkung einwirkt; diese differenzierte Schiebewirkung dient dazu, zumindest teilweise die Wirkung des Gasdrucks auf den schmelzbaren Stopfen (24) zu reduzieren.

2. Sicherheitsventil gemäß Anspruch 1, **dadurch gekennzeichnet, dass** es ein gemeinsames Gehäuse (10) mit dem Vorratsbehälter enthält; dieses Gehäuse umfasst einen zylindrischen Teil (10b), der gegenüber dem Äußeren des Vorratsbehälters geöffnet ist, sowie einen zweiten zylindrischen Teil (10a), der über einen geschlossenen Boden mit einem geringeren Durchmesser als der erste zylindrische Teil (10b) verfügt. Der zweite Teil (10a) ist durch seine Seitenwand mit dem Inneren des Vorratsbehälters verbunden. Ferner zeichnet sich dieses Ventil **dadurch** aus, dass es über eine Hülse (22) verfügt, die im Inneren des ersten zylindrischen Teils (10b) befestigt ist und deren Öffnung in Richtung des zweiten zylindrischen Teils (10a) weist. Die Hülse enthält den schmelzbaren Stopfen (24), der durch einen einzelnen Schaft (26) des besagten Kolbens (14) mit differenzierter Wirkung in seiner Position gehalten wird, der sich ebenfalls im genannten zweiten zylindrischen Teil (10b) befindet. Ferner zeichnet sich das Sicherheitsventil **dadurch** aus, dass es sich bei besagtem Kolben mit differenzierter Wirkung (14) um eine Kolbenbaugruppe mit Zweifachwirkung handelt, die somit im eigentlichen Sinne zwei Kolben enthält, die über einen axialen Schaft (16) miteinander verbunden sind. Der erste Kolben (14a) befindet sich normalerweise am Boden des zweiten zylindrischen Teils (10a), während sich der zweite Kolben (14b) normalerweise zwischen dem ersten und dem zweiten zylindrischen Teil befindet, um eine Dichtheit zwischen diesen beiden Bereichen zu gewährleisten. Der Durchmesser des zweiten Kolbens (14b) ist größer als der Durchmesser des ersten Kolbens (14a).

## Claims

1. Safety valve for a pressurised gas tank containing a plug (24) made of fusible material intended to melt at a set temperature so as to release the pressurised gas from the tank, distinguished by the fact that the fusible plug (24) is subjected to the action of a sliding piston (14) with a differential action intended to reduce at least in part the effect of the pressure of the gas on the fusible plug (24).

2. Valve as in Claim 1, distinguished by the fact that it contains a housing (10) fixed to the tank and containing a first cylindrical part (10b) open to the outside of the tank and a second cylindrical part (10a) with a closed bottom end with a diameter smaller than that of the first cylindrical part (10b) and connecting, through its side wall, with the inside of the tank, a bush (22) fixed to the inside of the first cylindrical part (10b) and whose opening faces the second cylindrical part (10a), the bush containing the fusible plug (24) that is held there by a rod (26) fixed to the said piston (14) with a differential action located in the said second cylindrical part (10a) and by the fact that the said piston with a differential action (14) is a double-action piston containing two pistons connected by an axial rod (16), the first piston (14a) usually being located at the bottom of the second cylindrical part (10a) and the second piston (14b) usually being located between the first and second cylindrical parts so as to ensure the seal between these two, the diameter of the second piston (14b) being greater than the diameter of the first piston (14a).
